# EUROPÄISCHE PATENTSCHRIFT

(11) **EP 1 963 710 B1**
(45) Veröffentlichungstag und Bekanntmachung des Hinweises auf die Patenterteilung: **21.08.2013**
(21) Anmeldenummer: 06841144.6
(22) Anmeldetag: 22.12.2006
(51) Int. Cl.: F16G 13/16

(54) **KETTENGLIED MIT EINER VERRIEGELUNGSEINRICHTUNG**
CHAIN LINK WITH A LOCKING DEVICE
ELEMENT DE CHAINE DOTE D'UN DISPOSITIF DE VERROUILLAGE

(30) Priorität: 23.12.2005 DE 102005061775
(43) Veröffentlichungstag der Anmeldung: 03.09.2008
(73) Patentinhaber: Tsubaki Kabelschlepp GmbH, 57482 Wenden-Gerlingen (DE)
(72) Erfinder: KEMPER, Uwe, 57223 Kreuztal (DE)
(74) Vertreter: Neumann, Ditmar
(86) Internationale Anmeldenummer: PCT/EP2006/012504
(87) Internationale Veröffentlichungsnummer: WO 2007/076987

(56) Entgegenhaltungen:
- EP-A1- 0 844 415
- WO-A-00/63586
- DE-A1- 19 948 926
- DE-C1- 3 714 056
- DE-U1- 29 721 588

## Beschreibung

Der Gegenstand der Erfindung bezieht sich auf ein Kettenglied einer Energieführungskette.

Zum Führen von Leitungen, Kabeln, Schläuchen und dergleichen zwischen einem ortsfesten und einem beweglichen Anschlusspunkt werden Energieführungsketten eingesetzt. Eine Energieführungskette ist gebildet durch eine Mehrzahl von Kettengliedern. Die Kettenglieder sind gelenkig miteinander verbunden. Jedes Kettenglied umfasst zwei Laschen und wenigstens einen mit den Laschen gelenkig verbindbaren bzw. verbundenen Quersteg auf. Die Laschen und die Querstege bilden einen Führungskanal, in dem die Leitungen, Schläuche oder dergleichen geordnet sind.

Es sind Kettenglieder bekannt, welche lediglich um eine Schwenkachse an einer Lasche verschwenkbar sind. Ein solcher Quersteg weist auf der gegenüberliegen Seite einen Schnapphacken auf, der mit der gegenüberliegenden Lasche zusammenwirkt. Eine solche Ausgestaltung eines Kettengliedes ist beispielsweise durch die EP-A1-0 126 862 bekannt.

Die WO 98/1134050 beschreibt ein Kettenglied, welches durch zwei Laschen gebildet ist. Das Kettenglied weist einen Quersteg auf, welcher gelenkig mit den Laschen verbunden ist, so dass der Quersteg von der einen bzw. von der anderen Lasche gelöst und verschwenkt werden kann.

Die EP 0 844 415 A1 beschreibt ein Kettenglied für eine Energieführungskette. Das Kettenglied weist zwei beabstandet zueinander angeordnete Laschen auf. Die Laschen sind durch wenigstens einen Quersteg miteinander verbunden. Der Quersteg ist um eine Schwenkachse zwischen einer geschlossenen Stellung und einer geöffneten Stellung verschwenkbar. Der Quersteg weist an seinen Endbereichen Laschen auf, die sich in Längsrichtung des Querstegs von dem jeweiligen freien Ende wegerstrecken. Die Stege können Vorsprünge oder Ausnehmungen aufweisen. Die Stege sind parallel zueinander ausgebildet.

Die Lasche weist eine Ausnehmung auf. In der Ausnehmung sind Öffnungen oder Vorsprünge in Abhängigkeit von der Ausgestaltung des Querstegs vorgesehen. Die Stege des Querstegs werden zum Verbinden mit der Lasche zusammengedrückt, bis ein entsprechender Vorsprung, der am Steg ausgebildet ist, in eine Ausnehmung der Lasche eingreift. Der Vorsprung und die Ausnehmung bilden eine Gelenkverbindung. Zum Öffnen des Querstegs müssen die Stege zusammengedrückt werden, so dass der Quersteg um die andere Verbindung verschwenkt werden kann.

Durch die Druckschrift DE 297 21 588 U1 ist ein Kettenglied mit einem verschwenkbaren Quersteg bekannt. Der Quersteg ist um eine Seitenlasche verschwenkbar. Mit der anderen Seitenlasche des Kettengliedes ist der Quersteg rastend verbunden. Hierzu weist der Quersteg einen Federarm mit einem Rastelement auf. Zur Ausbildung des Federarms weist das freie Ende des Querstegs einen sich in dessen Längsrichtung erstreckenden Schlitz auf. Die Lasche des Kettengliedes weist eine Ausnehmung auf, die einen Unter-Hinterschnitt aufweisende Rastnase hat.

Die Druckschrift DE 199 48 926 A1 offenbart ist ein Kettenglied mit einem verschwenkbaren Quersteg bekannt. Der Quersteg weist zwei Teile auf, die relativ zueinander in Längsrichtung des Querstegs verschiebbar sind. Zur Arretierung des Querstegs weist dieser an einem Teil eine U-förmige Aufnahme auf, in die im geschlossenen Zustand des Querstegs ein Zapfen, der an der Lasche ausgebildet ist, eingreift.

DE 37 14056 beschreibt ein Kettenglied gemäβ dem Oberbegriff des Anspruchs 1.

Die WO 00/063586 beschreibt eine Energieführungskette zur Führung von Kabeln, Schläuchen und dergleichen zwischen einem Ortsfesten und einem beweglichen Anschlusspunkt. Die Energieführungskette ist aufgebaut aus einer Vielzahl von gelenkig miteinander verbundener Kettenglieder aus Kunststoff, die jeweils aus zwei Seitenlaschen und zwei Querstegen gebildet sind. Wenigstens einer der Querstege ist lösbar mit den Seitenlaschen verbunden. Der Quersteg weist Ansätze auf, an deren Endbereichen Lagezapfen vorgesehen sind, die quer zu dem Quersteg ausgerichtet sind. In den Seitenlaschen sind zwei parallele Schlitze vorgesehen, in die die Ansätze des Querstegs eingreifen. Die Schlitze weisen nutenförmige Lagestellen mit Hinterschneidungen auf, so dass in diesen die Lagezapfen einrastbar sind. Zur Sicherung des Querstegs ist eine Schnappeinrichtung vorgesehen. Die Schnappeinrichtung weist einen elastisch ausgebildeten Schnapphacken auf, der im Wesentlichen senkrecht zur Längsrichtung der Lasche und parallel zu dieser verläuft. Der Schnapphacken greift im befestigten Zustand des Querstegs mittig zwischen den Ansätzen durch den Zwischenraum zwischen den beiden Ansätzen hindurch, so dass der Hacken von Hand zugänglich ist.

Hiervon ausgehend liegt der vorliegenden Erfindung die Aufgabe zugrunde ein Kettenglied so weiterzubilden, dass ein vereinfachtes Lösen des Querstegs erreicht wird.

Diese Aufgabe wird erfindungsgemäß durch ein Kettenglied mit den Merkmalen des Anspruchs 1 gelöst. Vorteilhafte Weiterbildungen und Ausgestaltungen der Erfindung sind Gegenstand der abhängigen Ansprüche.

Das erfindungsgemäße Kettenglied einer Energieführungskette zur Führung von Kabeln, Leitungen, Schläuchen zwischen einem ortsfesten und einem beweglichen Anschlusspunkt weist zwei beabstandete zueinander angeordnete Laschen auf. Wenigstens eine Lasche ist gelenkig mit wenigstens einem Quersteg verbindbar. Der Quersteg ist um wenigstens eine Schwenkachse zwischen einer geschlossenen Stellung und einer geöffneten Stellung verschwenkbar. Das Kettenglied weist eine lösbare Verriegelungseinrichtung auf, mittels derer der Quersteg an wenigstens einer Lasche festlegbar ist. Die Verriegelungseinrichtung weist wenigstens ein zur Lasche gehörendes elastisches Verriegelungselement auf, welches quer zur Längsachse auslenkbar ist. Das Verriegelungselement wirkt mit einem Widerlager zusammen, wobei in der geschlossenen Stellung des Quersteg das wenigstens eine Verriegelungselement und das wenigstens eine Widerlager einen Wirkbereich aufweisen, welche zwischen der Schwenkachse des Querstegs und einer Außenseite der Lasche liegt. so dass nach Lösen der Wickverbindung zwischen dem Verriegelungselement (8) und dem Widerlager der einen Lasche zum Verschwenken der Querstegs keine zusätzliche Kraft not wendig ist, um die Wirkverbindung zwischen dem Verriegelungselement und dem Widerlager der anderen Lasche zu überwinden. Das Verriegelungselement weist zwei Endbereiche auf, die jeweils mit der Lasche verbunden sind. Das Verriegelungselement erstreckt sich im Wesentlichen in Längsrichtung der Lasche, wobei die Auslenkung des Verriegelungselementes quer zur Laschenebene folgt.

Durch diese erfindungsgemäße Ausgestaltung des Kettengliedes wird ein vereinfachtes Lösen des Querstegs erreicht. Ist der Quersteg mit beiden Laschen gelenkig verbunden, so bedarf es, im Gegensatz zu der Ausgestaltung nach der WO 00/063586 - keiner zusätzlichen Kraft, um die Verrieglung zu lösen.

Um sicherzustellen, dass ein unbeabsichtigtes Lösen des Querstegs nicht eintritt, wird nach einer vorteilhaften Ausgestaltung des erfindungsgemäßen Kettengliedes vorgeschlagen, dass das Verriegelungselement in einer fensterartigen Ausnehmung der Lasche angeordnet ist. Dadurch, dass das Verriegelungselement in einer fensterartigen Ausnehmung der Lasche angeordnet ist, wird auch ein gewisser Schutz des Verriegelungselementes erreicht, da die Wandung der Lasche das Verriegelungselement teilweise abdeckt.

Das Verriegelungselement weist vorzugsweise zwei elastische Abschnitte auf, zwischen denen ein Halteabschnitt ausgebildet ist. Der Halteabschnitt wirkt mit dem Widerlager zusammen. Durch die zwei elastischen Abschnitte wird die Auslenkbarkeit des Verriegelungselementes erreicht. Es besteht die Möglichkeit, dass das Verriegelungselement ein separates Bauteil ist, welches in die Lasche eingebracht wird. Hierbei kann die Lasche eine entsprechende Ausnehmung aufweisen und das Verriegelungselement mit der Lasche Form- und/oder kraftschlüssig verbunden wird. Das Verriegelungselement kann auch einstückig mit der Lasche ausgebildet sein. Bevorzugt ist dabei eine Ausgestaltung des Verriegelungselementes, bei der das Verriegelungselement aus einem anderen Werkstoff hergestellt ist als die Lasche. Vorzugsweise wird die Lasche und das Verriegelungselement nach den Zweikomponentenspritzverfahren hergestellt.

Das elastische Verriegelungselement weist zwei elastische Abschnitte auf. Vorzugsweise ist wenigstens ein elastischer Abschnitt wenigstens bogenförmig, insbesondere wellenförmig ausgebildet.

Bevorzugt ist eine Ausgestaltung des Kettengliedes, bei der das Verriegelungselement und/oder das Widerlager hackenförmig ausgebildet ist, bzw. sind.

Das Verriegelungselement weist einen Haltebereich auf, der mit dem Widerlager so zusammenwirkt, dass ein Öffnen bzw. Lösen des Querstegs nur unter einer Aufbringung einer Kraft auf das Verriegelungselement erfolgen kann. Zur einer noch weiteren Erhöhung der zum Lösen der Verriegelung aufwendigen Kraft kann der Haltebereich und/oder das Widerlager mit einer Oberflächenstruktur versehen sein. Die Struktur kann eine Mikrostruktur oder Makrostruktur sein. Mischungen von Mikrostrukturen und Makrostrukturen sind auch möglich. Die erfindungsgemäße Ausbildung des Kettengliedes ermöglicht Lösen des Querstegs von einer Lasche, wobei zum Verschwenken des Quersteg eine geringe Kraft notwendig ist, das die Ausgestaltung der Verriegelungseinrichtung so gewählt ist, dass dies bei gelösten Verriegelungen keinen zusätzlichen Widerstand erzeugt.

Weitere Vorteile und Einzelheiten der Erfindung werden anhand der in der Zeichnung dargestellten Ausführungsbeispiele erläutert, ohne dass der Gegenstand der Erfindung auf diese konkreten Ausführungsbeispiele beschränkt wird.

Es zeigen:
- Fig. 1: ein erstes Ausführungsbeispiel eines Kettengliedes in einer Draufsicht,

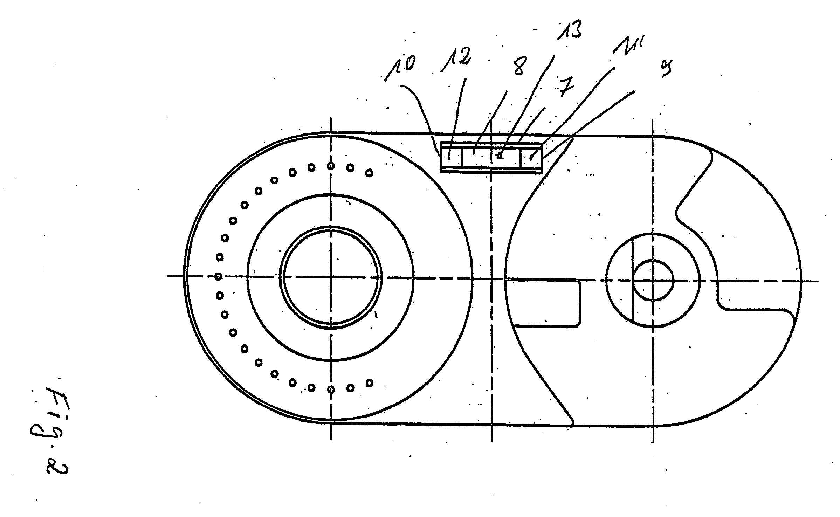

- Fig. 2: das Kettenglied nach Fig. 1 in einer Seitenansicht,
- Fig. 3: das Kettenglied nach Fig. 1 in einer Vorderansicht,
- Fig. 4: einen Quersteg eines Kettengliedes nach Fig. 1 in einer Drauf-sicht,
- Fig. 5: den Quersteg nach Fig. 4 in einer Vorderansicht,
- Fig. 6 und 7: das Kettenglied mit einem Quersteg in geschlossener Stellung
- Fig. 8: das Kettenglied mit einem Quersteg in einer geöffneten Stel-lung,

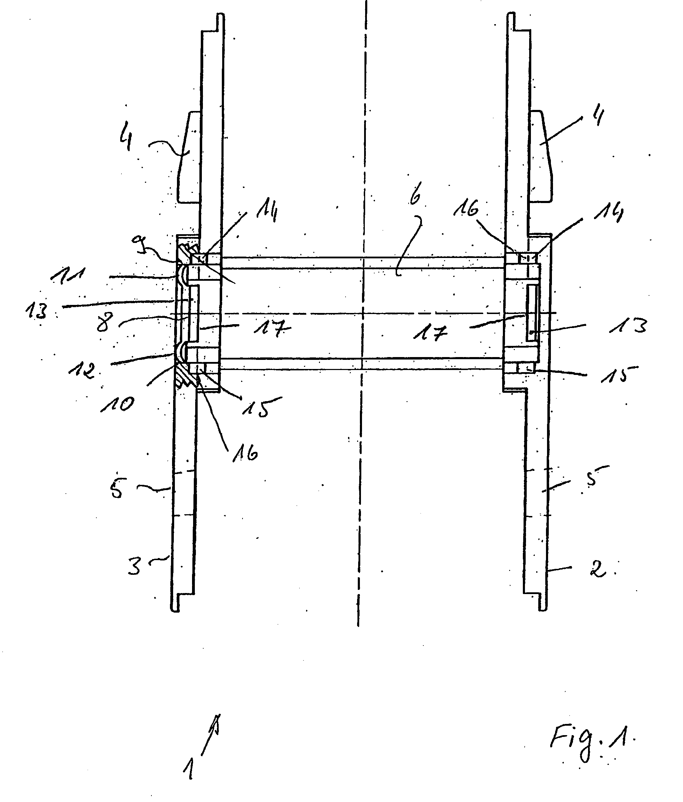

Fig. 1 zeigt ein erstes Ausführungsbeispiel eines Kettengliedes 1 einer Energieführungskette zur Führung von Kabeln, Leitungen, Schläuchen und dergleichen zwischen einem ortsfesten und einem beweglichen Anschlusspunkt. Das Kettenglied 1 weist zwei beabstandet zueinander angeordnete Laschen 2, 3 auf. Jede Lasche 2, 3 weist an einem Endbereich einen Gelenkbolzen 4 auf. An dem gegenüberliegenden Endbereich ist jeweils eine Gelenkaufnahme 5 vorgesehen, wobei die Gelenkaufnahme 5 so ausgebildet ist, dass ein Bolzen 4 in die Gelenkaufnahme 5 einbringbar ist, so dass benachbarte Glieder gelenkig miteinander verbunden werden können. Zur Beschränkung des Verschwenkwinkels zweier Benachbarter Kettenglieder können die Laschen entsprechende Anschläge aufweisen.

In dem dargestellten Ausführungsbeispiel sind die Laschen durch einen oberen und unteren Quersteg miteinander verbunden. Die Darstellung nach Fig. 1 zeigt das Kettenglied mit einem unteren Quersteg 6. Der obere Quersteg ist der Übersichtlichkeit wegen nicht dargestellt. Die Laschen 2, 3 weisen eine fensterartige Ausnehmung 7 auf, in der ein Verriegelungselement 8 angeordnet ist. Das Verriegelungselement 8 weist zwei Endbereiche 9, 10 auf, welche mit der Lasche verbunden sind.

In dem dargestellten Ausführungsbeispiel weist das Verriegelungselement 8 zwei elastische Abschnitte 11, 12 auf. Die elastischen Abschnitte 11, 12 sind bogenförmig ausgebildet. Zwischen den elastischen Abschnitten 11, 12 ist ein Halteabschnitt 13 ausgebildet. Das Verriegelungselement 8 ist innerhalb der fensterartigen Ausnehmung und 7 quer zur Längsrichtung der Lasche nach außen hin auslenkbar. Nach erfolgter Auslenkung des Verriegelungselementes kehrt dieses in die ursprüngliche Stellung zurück.

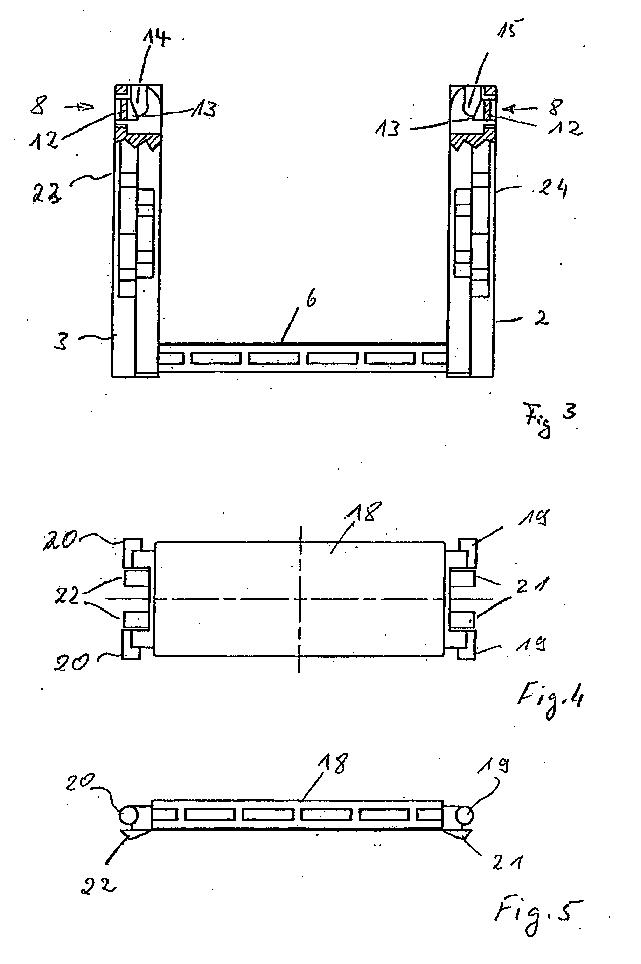

Jede Lasche weist eine sich über einen Teil der Höhe der Lasche zum gegenüberliegenden Längsrand erstreckende Aufnahme auf. Die Aufnahme weist Gelenkaufnahmen 14, 15 auf, in die entsprechende Gelenkbolzen eines Querstegs einbringbar sind. Diese Gelenkaufnahmen 14, 15 sind vorzugsweise so ausgebildet, dass eine rastende Verbindung zwischen den Gelenkaufnahmen 14, 15 und den Gelenkbolzen erreicht wird. Mit den Bezugszeichen 16 ist eine Schwenkachse bezeichnet, um die ein Quersteg verschenkt wird, wenn dieser mit einer der Laschen verbunden ist. Aus der Darstellung nach Fig. 1 bzw. Fig. 3 ist ersichtlich, dass die Längskante 17 des Halteabschnittes 13 höchstens bis zur Schwenkachse 16 reicht.

Der Halteabschnitt 13 ist vorzugsweise im Querschnitt dreieckförmig ausgebildet, wobei sich der Halteabschnitt 13 nach unten hin verbreitert, wie dies aus der Fig. 3 ersichtlich ist.

Fig. 4 und 5 zeigen einen Quersteg 18 in einer Draufsicht bzw. einer Vorderansicht. Der Quersteg 18 weist an seinen Endbereichen Zapfen 19, 20 auf. Die Zapfen 19, 20 sind so ausgebildet, dass diese in die Gelenkaufnahme 14 bzw. 15 einbringbar sind. Die Achsen der Zapfen 19, 20 sind Koaxial zur Schwenkachse 16, so dass zum Öffnen des Kettengliedes der Quersteg 18 um die Schwenkachse 16 verschwenkbar ist.

In dem dargestellten Ausführungsbeispiel weist jeder Endbereich des Querstegs 18 Widerlager 21, 22 auf. Jedes Widerlager weist eine Einführschräge auf, welche mit dem Halteabschnitt zusammenwirkt, so dass beim Verschließen des Kettengliedes das Verriegelungselement zur Außenseite 23 der Lasche 3 bzw. zur Außenseite 24 der Lasche 2 und im Wesentlichen Quer zur Längsrichtung des Kettengliedes ausgelenkt wird.

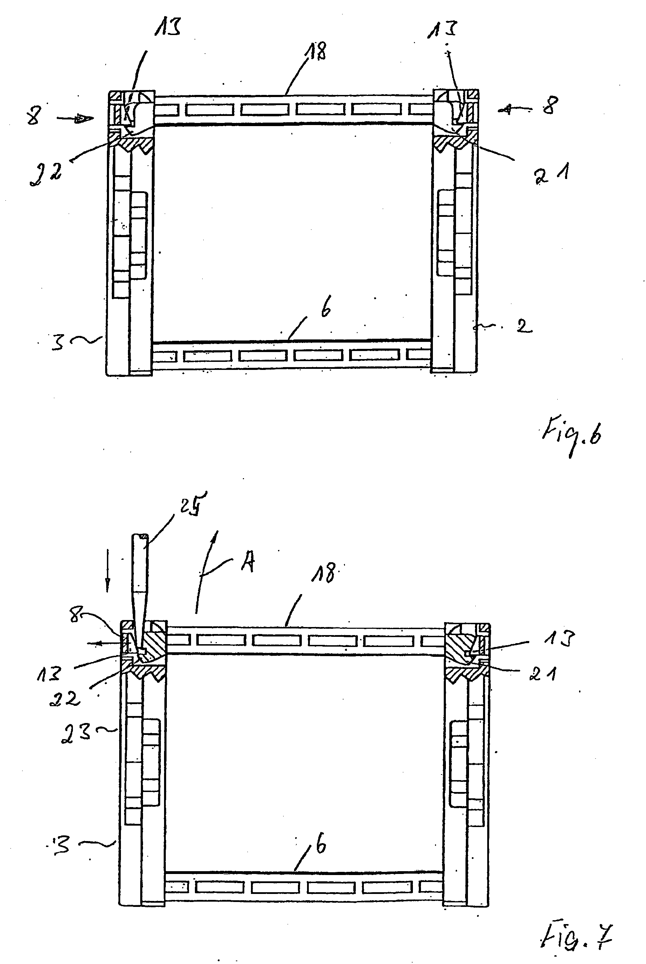

Fig. 6 zeigt das erfindungsgemäße Kettenglied einer Energieführungskette zur Führung von Kabeln, Leitungen, Schläuchen und dergleichen zwischen einem ortsfesten und einem beweglichen Anschlusspunkt im geschlossenen Zustand. Aus der Darstellung der Fig. 6 ist ersichtlich, dass der Halteabschnitt 13 des Verriegelungselementes 8 mit dem Widerlager 21 bzw. 22 zusammenwirkt, so dass der Quersteg 18 lösbar mit den Laschen 2, 3 verbunden ist. In dem dargestellten Ausführungsbeispiel kann die lösbare Verbindung des Querstegs 18 mit der Lasche 2 und/oder der Lasche 3 gelöst werden. Zum Verschwenken des Querstegs 18 beispielsweise um die Schwenkachse 16 der Lasche 2 wird die Verbindung zwischen dem Quersteg 18 und der Lasche 3 gelöst. Hierzu wird ein Werkzeug 25, bei dem es sich beispielsweise um einen Schraubendreher handelt, so zwischen das Verriegelungselement 8 und den Endbereich des Querstegs 18 derart eingebracht, dass das Verriegelungselement 8 nach außen hin, das heißt in Richtung der Außenseite 23, bewegt wird. Durch die Bewegung des Verriegelungselementes 8 wird die Wirkverbindung zwischen dem Halteabschnitt 13 und dem Widerlager 22 gelöst, so dass der Quersteg 18 um die Schwenkachse 16 an der Lasche 2 verschwenkt werden kann, wie dies durch den Pfeil A angedeutet ist.

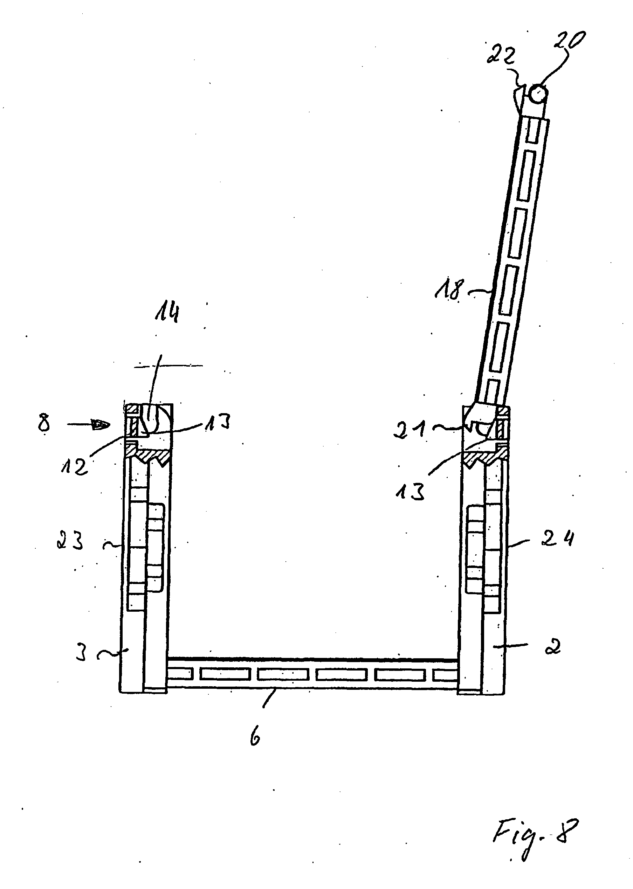

Das Verriegelungselement 8 und das Widerlager 21 bzw. 22 weisen einen Wirkbereich auf, der zwischen der Schwenkachse 16 und einer Außenseite 23 bzw. 24 liegt, so dass zum Verschwenken des Querstegs 18 keine zusätzliche Kraft notwendig ist, um die Wirkverbindung zwischen dem Verriegelungselement und dem Widerlager an der anderen Lasche zu überwinden. Fig. 8 zeigt dass Kettenglied nach Fig. 7 in einer geöffneten Stellung des Querstegs 18.

### Bezugszeichenliste

- 1.: Kettenglied
- 2.: Lasche
- 3.: Lasche
- 4.: Gelenkbolzen
- 5.: Gelenkaufnahme
- 6.: unterer Quersteg
- 7.: fensterartige Ausnehmung
- 8.: Verriegelungselement
- 9.: Endbereich
- 10.: Endbereich
- 11.: elastischer Abschnitt
- 12.: elastischer Abschnitt
- 13.: Halteabschnitt
- 14.: Gelenkaufnahme
- 15.: Gelenkaufnahme
- 16.: Schwenkachse
- 17.: Längskante
- 18.: Quersteg
- 19.: Zapfen
- 20.: Zapfen
- 21.: Widerlager
- 22.: Widerlager
- 23.: Außenseite
- 24.: Außenseite
- 25.: Werkzeug
- 26.: Lasche
- 27.: Lasche
- 28.: unterer Quersteg
- 29.: Gelenkbolzen
- 30.: Gelenkbolzen
- 31.: Gelenkaufnahme
- 32.: Gelenkaufnahme
- 33.: Gelenkaufnahme
- 34.: Gelenkaufnahme
- 35.: Widerlager
- 36.: Widerlager
- 37.: Quersteg
- 38.: Zapfen
- 39.: Fortsatz
- 40.: Verriegelungselement
- 41.: elastischer Abschnitt
- 42.: elastischer Abschnitt
- 43.: Halteabschnitt
- 44.: Öffnung
- 45.: Schwenkachse
- 46.: Außenseite
- 47.: Außenseite
- 48.: Werkzeug

## Patentansprüche

1. Kettenglied einer Energieführungskette zur Führung von Kabeln, Leitungen, Schläuchen und dergleichen zwischen einem ortsfesten und einem beweglichen Anschlußpunkt, wobei das Kettenglied -durch zwei beabstandet zueinander angeordnete Laschen (2, 3) und wenigstens einen mit den Laschen (2, 3) gelenkig verbindbaren Quersteg (6), der um wenigstens eine Schwenkachse (45) zwischen einer geschlossenen Stellung und einer geöffneten Stellung verschwenkbar ist, und mit einer lösbaren Verriegelungseinrichtung mittels derer der Quersteg (6) an wenigstens einer Lasche (2, 3) festlegbar ist, gebildet ist, **dadurch gekennzeichnet, dass** die Verriegelungseinrichtung wenigstens ein zur Lasche (2,3) gehörendes elastisches Verriegelungselement (8) aufweist, welches zwei Endbereiche (9, 10) aufweist, die mit der Lasche (2, 3) verbunden sind, und im wesentlichen quer zur Längsachse des Kettengliedes auslenkbar ist, und wenigstens ein mit dem Verriegelungselement (8) zusammenwirkendes Widerlager (21, 22), wobei in der geschlossenen Stellung des Querstegs (6) das wenigstens eine Verriegelungselement (8) und das wenigstens eine Widerlager (21, 22) einen Wirkbereich aufweisen, welcher zwischen der Schwenkachse (45) und einer Außenseite der Lasche liegt, so dass nach Lösen der Wirkverbindung zwischen dem Verriegelungselement (8) und dem Widerlager (22,21) der einen Lasche (3,2) zum Verschwenken des Querstegs (6) keine zusätzliche Kraft notwendig ist, um die Wirkverbindung zwischen dem Verriegelungselement (8) und dem Widerlager (21, 22) der anderen Lasche zu überwinden

2. Kettenglied nach Anspruch 1, **dadurch gekennzeichnet, dass** das Verriegelungselement (8) in einer fensterartigen Ausnehmung (7) der Lasche (2, 3) angeordnet ist.

3. 4. Kettenglied nach Anspruch 1 oder 2, **dadurch gekennzeichnet, dass** das Verriegelungselement (7) zwei elastische Abschnitte (11, 12) aufweist, zwischen denen ein Halteabschnitt (13) ausgebildet ist.

4. Kettenglied nach Anspruch 34, **dadurch gekennzeichnet, dass** wenigstens ein elastischer Abschnitt (11, 12) im wesentlichen bogenförmig, insbesondere wellenförmig ausgebildet ist.

5. Kettenglied nach wenigstens einem der vorhergehenden Ansprüche 1 bis 4, **dadurch gekennzeichnet, dass** das Verriegelungselement (7) und/oder das Widerlager (11, 12) hakenförmig ausgebildet ist bzw. sind.

## Claims

1. Chain link of an energy-guiding chain for guiding cables, lines, hoses and the like between a stationary and a movable point of connection, wherein the chain link comprises two spaced-apart link plates (2, 3) and at least one crosspiece (6), which can be connected in an articulated manner to the link plates (2, 3) and can be pivoted, about at least one pivot axis (45), between a closed position and an open position, the chain link having a releasable locking device, by means of which the crosspiece (6) can be secured on at least one link plate (2, 3), **characterized in that** the locking device has at least one elastic locking element (8), which belongs to the link plate (2, 3) and has two end regions (9, 10), connected to the link plate (2, 3), and can be deflected essentially transversely to the longitudinal axis of the chain link, and at least one abutment (21, 22), which interacts with the locking element (8), wherein, in the closed position of the crosspiece (6), the at least one locking element (8) and the at least one abutment (21, 22) have an operative region located between the pivot axis (45) and an outer side of the link plate, and therefore, following release of the operative connection between the locking element (8) and the abutment (22, 21) of the one link plate (3, 2), for the purpose of pivoting the crosspiece (6), there is no need for any additional force in order to overcome the operative connection between the locking element (8) and the abutment (21, 22) of the other link plate.

2. Chain link according to Claim 1, **characterized in that** the locking element (8) is arranged in a window-like aperture (7) of the link plate (2, 3).

3. Chain link according to Claim 1 or 2, **characterized in that** the locking element (7) has two elastic portions (11, 12), between which a retaining portion (13) is formed.

4. Chain link according to Claim 3, **characterized in that** at least one elastic portion (11, 12) is of essentially arcuate, in particular undulating, design.

5. Chain link according to at least one of preceding Claims 1 to 4, **characterized in that** the locking element (7) and/or the abutment (11, 12) are/is of hook-like design.

## Revendications

1. Elément de chaîne d'une chaîne de transfert d'énergie pour guider des câbles, des conduites, des tuyaux et similaires entre un point de raccordement fixe et un point de raccordement mobile, l'élément de chaîne comprenant deux éclisses (2, 3) disposées à distance l'une de l'autre et au moins une nervure transversale (6) pouvant relier les éclisses (2, 3) de manière articulée, qui peut pivoter autour d'au moins un axe de pivotement (45) entre une position fermée et une position ouverte, et avec un dispositif de verrouillage desserrable au moyen duquel la nervure transversale (6) peut être fixée à au moins une éclisse (2, 3), **caractérisé en ce que** le dispositif de verrouillage présente au moins un élément de verrouillage élastique (8) appartenant à l'éclisse (2, 3), lequel présente deux régions d'extrémité (9, 10) qui sont connectées à l'éclisse (2, 3) et peut être dévié essentiellement transversalement à l'axe longitudinal de l'élément de chaîne, et au moins une butée (21, 22) coopérant avec l'élément de verrouillage (8), l'au moins un élément de verrouillage (8) et l'au moins une butée (21, 22), dans la position fermée de la nervure transversale (6), présentant une plage d'action qui se situe entre l'axe de pivotement (45) et un côté extérieur de l'éclisse, de telle sorte qu'après le desserrage de la liaison fonctionnelle entre l'élément de verrouillage (8) et la butée (22, 21) d'une des éclisses (3, 2), aucune force supplémentaire ne soit nécessaire pour le pivotement de la nervure transversale (6), afin de surmonter la liaison fonctionnelle entre l'élément de verrouillage (8) et la butée (21, 22) de l'autre éclisse.

2. Elément de chaîne selon la revendication 1, **caractérisé en ce que** l'élément de verrouillage (8) est disposé dans un évidement (7) de type fenêtre de l'éclisse (2, 3).

3. Elément de chaîne selon la revendication 1 ou 2, **caractérisé en ce que** l'élément de verrouillage (7) présente deux portions élastiques (11, 12) entre lesquelles est réalisée une portion de retenue (13).

4. Elément de chaîne selon la revendication 3, **caractérisé en ce qu'**au moins une portion élastique (11, 12) est réalisée essentiellement sous forme courbe, en particulier sous forme ondulée.

5. Elément de chaîne selon au moins l'une quelconque des revendications 1 à 4, **caractérisé en ce que** l'élément de verrouillage (7) et/ou la butée (11, 12) est ou sont réalisés en forme de crochet.
